# EUROPÄISCHE PATENTANMELDUNG

(11) **EP 1 145 792 A2**
(43) Veröffentlichungstag der Anmeldung: **17.10.2001**
(21) Anmeldenummer: 01100957.8
(22) Anmeldetag: 17.01.2001
(51) Int. Cl.: B23H 9/00, C25F 7/00, B23H 3/00

(54) **Verfahren und Vorrichtung zum Herstellen einer Innenoberfläche eines Edelstahltankes**

(30) Priorität: 20.01.2000 DE 10002415
(71) Anmelder: Feldbinder & Beckmann Fahrzeugbau GmbH & Co. KG, 21423 Winsen/Luhe (DE)
(72) Erfinder: Jan-Dirk Beckmann, D-21423 Winsen/Luhe (DE); Otto Feldbinder, D-29643 Neuenkirchen (DE)
(74) Vertreter: Richter, Werdermann & Gerbaulet

(57) **Zusammenfassung**

Um ein verbessertes Verfahren zur Verfügung zu stellen, und auf schnelle und kostengünstige Art und Weise eine Innenoberfläche eines Edelstahltankes mit entsprechender Oberflächengüte herzustellen, werden folgende Schritte vorgeschlagen:
(a) Einführen eines Rohres in den Edelstahltank entlang einer Längsachse desselben,
(b) Anordnen wenigstens einer Kathode im Inneren des Edelstahltankes und Einhängen dieser am Rohr derart, dass eine isolierte, starre Verbindung zwischen dem Rohr und der Kathode herstellt wird und die Kathode mit dem Rohr starr verbunden ist, wobei sich der Behälter um diese Einheit dreht,
(c) Anordnen eines Elektrolyten im Inneren des Tankes derart, dass die Kathode wenigstens teilweise in den Elektrolyten eintaucht,
(d) Anschließen des Rohres und des Edelstahltankes an eine Stromquelle derart, dass der Edelstahltank als Anode geschaltet ist, so dass ein mit dem Elektrolyten in Kontakt befindlicher Abschnitt der Innenoberfläche des Edelstahltankes einem elektrochemischen Polieren unterzogen wird, und
(e) Drehen des Edelstahltankes um seine Längsachse mit einer derartigen Geschwindigkeit, dass die gesamte Innenoberfläche des Edelstahltankes dem elektrochemischen Polieren unterzogen wird.

## Beschreibung

Die Erfindung betrifft ein Verfahren und eine Vorrichtung zum Herstellen einer Innenoberfläche eines Edelstahltankes für ein Tankfahrzeug, einen Container, einen Kesselwagen oder andere Behälter gemäß dem jeweiligen Oberbegriff des Anspruchs 1 bzw. 8.

Edelstahltanks für Tankfahrzeuge, Container, Kesselwagen oder andere Behälter benötigen eine besonders glatte, porenfreie und möglichst sterile Innenoberfläche, da in derartigen Tanks häufig Lebensmittel transportiert werden. Jedoch auch wenn andere Stoffe als Lebensmittel transportiert werden, ist die Innenoberfläche des Edelstahltanks nach Möglichkeit derart auszuführen, dass es zu keinen chemischen oder physikalischen Wechselwirkungen zwischen der Innenoberfläche des Edelstahltankes und dem im Edelstahltank befindlichen Transportgut kommt. Bisher werden Innenoberflächen derartiger Edelstahltanks manuell in verschiedenen Bearbeitungsschritten hergestellt. So erfolgt beispielsweise ein mechanisches Reinigen und Polieren durch Sandstrahlen oder Scheuern. Nach einem derartigen Verfahrensschritt ist es jedoch zusätzlich erforderlich, dass die Innenoberfläche entsprechend sterilisiert wird. Dies ist jedoch zeitaufwendig, kostenintensiv und nicht nachhaltig.

Der Erfindung liegt daher die Aufgabe zugrunde, ein verbessertes Verfahren und eine Vorrichtung der o.g. Art zur Verfügung zu stellen, welche die o.g. Nachteile beseitigen und auf schnelle und kostengünstige Art und Weise eine Innenoberfläche eines Edelstahltankes mit entsprechender Oberflächengüte herstellen.

Diese Aufgabe wird durch ein Verfahren der o.g. Art mit den in Anspruch 1 angegebenen Verfahrensschritten gelöst.

Dazu sind erfindungsgemäß folgende Verfahrensschritte vorgesehen:
(a) Einführen eines Rohres in den Edelstahltank entlang einer Längsachse desselben,
(b) Anordnen wenigstens einer Kathode im Inneren des Edelstahltankes und Einhängen dieser am Rohr derart, dass eine elektrisch leitende Verbindung zwischen der im Rohr befindlichen Leitung und der Kathode hergestellt wird und die Kathode am Rohr fest mit dem Rohr verbunden ist,
(c) Anordnen eines Elektrolyten im Inneren des Tankes derart, dass die Kathode wenigstens teilweise in den Elektrolyten eintaucht,
(d) Anschließen der im Rohr befindlichen isolierten Leitung (Kathode) und des Edelstahltankes an eine Stromquelle derart, dass der Edelstahltank als Anode geschaltet ist, so dass ein mit dem Elektrolyten in Kontakt befindlicher Abschnitt der Innenoberfläche des Edelstahltankes einem elektrochemischen Polieren unterzogen wird, und
(e) Drehen des Edelstahltankes um seine Längsachse mit einer derartigen Geschwindigkeit, dass die gesamte Innenoberfläche des Edelstahltankes dem elektrochemischen Polieren unterzogen wird.

Dies hat den Vorteil, dass die Innenoberfläche durch das elektrochemische Polieren auf einfache und schnelle Weise porenfrei und steril herstellbar ist, und zwar einschließlich aller Schweißnähte.

Vorzugsweise Weitergestaltungen des Verfahrens sind in den Ansprüchen 2 bis 7 beschrieben.

In einer bevorzugten Ausführungsform weist der Edelstahltank mehrere Tankkammern auf, wobei in jeder Tankkammer eine separate Kathode angeordnet wird.

Zweckmäßigerweise wird in Schritt (a) das Rohr durch jeweilige Endböden und/oder Zwischenböden des Edelstahltankes geführt.

Zum Durchführen des Rohres durch den Edelstahltank sind in den Endböden bzw. Zwischenböden desselben entsprechende Öffnungen ausgebildet.

Die Kathode und das Elektrolyt werden zweckmäßigerweise durch ein Mannloch bzw. eine Reinigungsöffnung des Edelstahltankes in diesen eingeführt, wobei eine besonders einfache und schnelle Zuführung einer Kathode dadurch erzielt wird, dass diese aus mehreren Einzelteilen im Tank zusammengesetzt wird.

Zur endgültigen Fertigstellung des Edelstahltankes werden nach Beendigung des elektrochemischen Polierens entsprechende Öffnungen in Endböden und/oder Zwischenböden des Edelstahltankes zum Durchführen des Rohres verschlossen.

Die Aufgabe wird ferner durch eine Vorrichtung der o.g. Art mit den in Anspruch 8 gekennzeichneten Merkmalen gelöst.

Dazu ist es erfindungsgemäß vorgesehen, dass die Vorrichtung folgendes aufweist, ein Rohr und eine darin befindliche isolierte Leitung zur Kathode zum Einführen in den Edelstahltank, ein Drehlager zum Auflegen des Edelstahltankes und Drehen desselben um dessen Längsachse, sowie eine Stromquelle zum Verbinden mit dem Edelstahltank und der an dem Rohr hängenden Kathode derart, dass der Edelstahltank als Anode geschaltet ist.

Dies hat den Vorteil, dass auf einfache, kostengünstige und schnelle Weise die Innenoberfläche des Edelstahltankes einschließlich aller Schweißnähte mittels elektrochemischen Polierens mit hoher Oberflächengüte porenfrei und steril herstellbar ist. Durch die erfindungsgemäße Anordnung folgt dabei beim Drehen des Edelstahltankes die Kathode lediglich unter Schwerkrafteinwirkung dem Elektrolyt, so dass für die Kathode keine separaten Antriebseinrichtungen erforderlich sind.

Vorzugsweise Weitergestaltungen der Vorrichtung sind in den Ansprüchen 9 bis 14 beschrieben.

So ist die Kathode beispielsweise in Form eines Korbes und optional derart ausgebildet, dass sich diese über eine volle Länge des Edelstahltankes bzw. der einzelnen Kammer/Abteile des Tanks erstreckt.

Für eine gleichmäßige und homogene Oberflächenbearbeitung ist der Korb derart ausgebildet, dass dieser an jeder Stelle einen konstanten Abstand von der Innenoberfläche des Edelstahltankes aufweist.

In einer bevorzugten Ausführungsform weist das Drehlager wenigstens zwei Lagerböcke mit wenigstens jeweils zwei Rädern zum Auflegen des Edelstahltankes auf, wobei wenigstens ein Rad mit einer Antriebsvorrichtung verbunden ist. Die Räder sind bevorzugt gummibereift, um den Edelstahltank beim Drehen mittels der Räder nicht außen zu beschädigen.

Für eine einfache und effektive elektrische Verbindung zwischen dem Edelstahltank und der Stromquelle ist wenigstens ein Rad mit der Stromquelle verbunden, wobei auf einer Oberfläche dieses Rades, die mit dem Edelstahltank in Verbindung steht, eine elektrisch leitende Schicht vorgesehen ist, oder der Edelstahltank wird an mehreren Stellen über flexible Stromkabel anodisch elektrisch verbunden.

Nachstehend wird die Erfindung anhand der beigefügten Zeichnungen näher erläutert. Diese zeigen in
- Fig. 1: eine bevorzugte Ausführungsform einer erfindungsgemäßen Vorrichtung mit einem Edelstahltank in seitlicher Schnittansicht und
- Fig. 2: die bevorzugte Ausführungsform einer erfindungsgemäßen Vorrichtung mit einem Edelstahltank im Querschnitt.

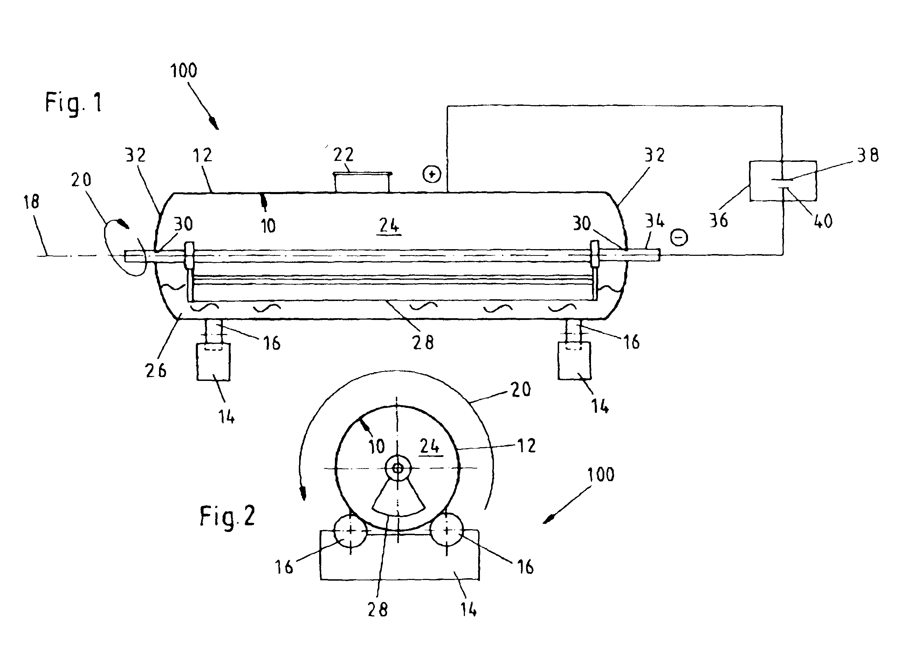

Die aus Fig. 1 und 2 ersichtliche bevorzugte Ausführungsform einer erfindungsgemäßen Vorrichtung 100 zum Herstellen einer Innenoberfläche 10 eines Edelstahltankes 12 umfasst zwei Lagerböcke 14 mit jeweils zwei Rädern 16, auf denen der Edelstahltank 12 aufliegt. Wenigstens eines der Räder 16 wird angetrieben, so dass sich der Edelstahltank 12 um seine Längsachse 18 in Richtung Pfeil 20 dreht. Der Edelstahltank 12 weist ein Mannloch bzw. eine Reinigungsöffnung 22 auf. Durch diese Öffnung 22 wird in einem Innenraum 24 des Edelstahltankes 12 ein Elektrolyt 26 sowie ein Korb 28 eingeführt. Zuvor wurde durch Öffnungen 30 in Endböden 32 ein Rohr 34 in den Innenraum 24 des Edelstahltankes 12 eingeführt. In dem Rohr befindet sich eine isolierte Stromzuführung zur Kathode, die als Korb ausgebildet ist. Der Korb 28 wird ggf. aus mehreren Einzelteilen zusammengesetzt und an dem Rohr 34 starr eingehängt. Durch die Schwerkrafteinwirkung hängt der Korb 28 immer nach unten und taucht in den Elektrolyt 26 ein.

Ferner ist eine Stromquelle 36 vorgesehen, deren Pluspol 38 mit dem Edelstahltank 12 und dessen Minuspol 40 mit der Kathode verbunden ist. Außerdem ist die Verbindung zwischen Korb 28 und Rohr 34 derart ausgebildet, dass sich keine elektrisch leitende Verbindung von dem Rohr 34 zum Korb 28 ergibt. Auf diese Weise ist der Korb 28 als Kathode und der Edelstahltank 12 als Anode geschaltet. Durch den elektrischen Anschluss des Edelstahltankes 12 und des Korbes 28 an der Stromquelle 36 kommt es zu einem elektrochemischen Polieren desjenigen Teiles bzw. Abschnittes der Innenoberfläche 10 des Edelstahltankes 12, welcher in Kontakt mit dem Elektrolyten 26 steht. Durch entsprechendes Drehen des Edelstahltankes 12 in Pfeilrichtung 20 wird sukzessive ein anderer Abschnitt der Innenoberfläche 10 des Edelstahltankes 12 in Kontakt mit dem Elektrolyten 26 gebracht, so dass nach einer gewissen Zeit die vollständige Innenoberfläche 10 des Edelstahltankes 12 elektrochemisch poliert ist.

Die Kathode 28 ist zweckmäßigerweise als Korb ausgebildet und aus Kupfer hergestellt, wobei ein Radius jeweils dem Tankradius angepasst ist. Sofern der Edelstahltank 12 mehrere Tankkammern mit jeweiligen Zwischenböden aufweist, ist das Rohr 34 auch durch diese Zwischenböden hindurch gesteckt oder an einem Zwischenboden gelagert. Es sind entsprechend isolierte Zuleitungen vorgesehen, welche durch das Rohr 34 verlaufen und mit dem Korb 28 verbunden sind.

Vor dem Drehen des Edelstahltankes 12 auf dem Drehlager14, 16 wird das Mannloch 22 mit einem entsprechenden Mannlochdeckel sowie entsprechende Auslassventile/-klappen verschlossen. Nach Beendigung des elektrochemischen Polierens der Innenoberfläche 10 des Edelstahltankes 12 werden das Rohr 34, die Kathode 28 sowie der Elektrolyt 26 aus dem Innenraum 24 des Edelstahltankes 12 entfernt. Schließlich werden die Öffnungen 30 zugeschweißt und örtlich elektropoliert, und der Edelstahltank ist fertig zur Montage auf einem Tankfahrzeug, einem Container, einem Kesselwagen oder anderen Behältern. Besonders vorteilhaft ist hierbei, dass das mechanische Polieren der Oberfläche und das Sterilisieren in einem einzigen Vorgang ausgeführt wird. In überraschender Weise ergeben sich auch für derart große Oberflächen, wie sie bei Edelstahltanks für Tankfahrzeuge, Container, Kesselwagen oder andere Behälter üblich sind, Oberflächen hoher Güte in extrem kurzer Zeit.

### BEZUGSZEICHENLISTE

- 100: Vorrichtung
- 10: Innenoberfläche
- 12: Edelstahltankes
- 14: Lagerbock
- 16: Rad
- 18: Längsachse
- 20: Pfeil bzgl. Drehrichtung des Edelstahltankes
- 22: Mannloch / Reinigungsöffnung
- 24: Innenraum
- 26: Elektrolyt
- 28: Kathode / Korb
- 30: Öffnung
- 32: Endboden
- 34: Rohr
- 36: Stromquelle
- 38: Pluspol
- 40: Minuspol

## Patentansprüche

1. Verfahren zum Herstellen einer Innenoberfläche eines Edelstahltankes für ein Tankfahrzeug, einen Container, einen Kesselwagen oder andere Behälter
gekennzeichnet durch folgende Schritte,
(a) Einführen eines Rohres in den Edelstahltank entlang einer Längsachse desselben,
(b) Anordnen wenigstens einer Kathode im Inneren des Edelstahltankes und Einhängen dieser am Rohr derart, dass eine isolierte, starre Verbindung zwischen dem Rohr und der Kathode herstellt wird und die Kathode mit dem Rohr starr verbunden ist, wobei sich der Behälter sich um diese Einheit dreht,
(c) Anordnen eines Elektrolyten im Inneren des Tankes derart, dass die Kathode wenigstens teilweise in den Elektrolyten eintaucht,
(d) Anschließen des Rohres und des Edelstahltankes an eine Stromquelle derart, dass der Edelstahltank als Anode geschaltet ist, so dass ein mit dem Elektrolyten in Kontakt befindlicher Abschnitt der Innenoberfläche des Edelstahltankes einem elektrochemischen Polieren unterzogen wird, und
(e) Drehen des Edelstahltankes um seine Längsachse mit einer derartigen Geschwindigkeit, dass die gesamte Innenoberfläche des Edelstahltankes dem elektrochemischen Polieren unterzogen wird.

2. Verfahren nach Anspruch 1,
dadurch gekennzeichnet, dass
der Edelstahltank mehrere Tankkammern aufweist, wobei in jeder Tankkammer eine separate Kathode angeordnet wird.

3. Verfahren nach Anspruch 1 oder 2,
dadurch gekennzeichnet, dass
in Schritt (a) das Rohr durch jeweilige Endböden und/oder Zwischenböden des Edelstahltankes geführt wird.

4. Verfahren nach Anspruch 3,
dadurch gekennzeichnet, dass
in den Endböden bzw. Zwischenböden des Edelstahltankes entsprechende Öffnungen zum Durchführen des Rohres ausgebildet werden.

5. Verfahren nach einem der vorhergehenden Ansprüche,
dadurch gekennzeichnet, dass
in Schritt (b) die Kathode aus mehreren Einzelteilen zusammengesetzt wird.

6. Verfahren nach einem der vorhergehenden Ansprüche,
dadurch gekennzeichnet, dass
die Kathode und das Elektrolyt durch ein Mannloch bzw. eine Reinigungsöffnung des Edelstahltankes in diesen eingeführt werden.

7. Verfahren nach einem der vorhergehenden Ansprüche,
dadurch gekennzeichnet, dass
nach Beendigung des elektrochemischen Polierens entsprechende Öffnungen in Endböden und/oder Zwischenböden des Edelstahltankes zum Durchführen des Rohres verschlossen werden.

8. Vorrichtung (100) zum Herstellen einer Innenoberfläche (10) eines Edelstahltankes (12) eines Tankfahrzeuges, Containers, Kesselwagens oder anderen Behältern,
dadurch gekennzeichnet, dass
diese ein Rohr (34) und eine Kathode (28) zum Einführen in den Edelstahltank (12), ein Drehlager (14, 16) zum Auflegen des Edelstahltankes (12) und drehen desselben um dessen Längsachse (18) sowie eine Stromquelle (36, 39, 40) zum Verbinden mit dem Edelstahltank (12) und der an dem Rohr (34) hängenden Kathode (28) derart, dass der Edelstahltank (12) als Anode geschaltet ist, aufweist.

9. Vorrichtung (100) nach Anspruch 8,
dadurch gekennzeichnet, dass
die Kathode in Form eines Korbes (28) ausgebildet ist.

10. Vorrichtung (100) nach Anspruch 8 oder 9,
dadurch gekennzeichnet, dass
die Kathode (28) derart ausgebildet ist, dass sich diese über eine volle Länge des Edelstahltankes (12) Kammer/Abteil erstreckt.

11. Vorrichtung (100) nach einem der Ansprüche 8 bis 10,
dadurch gekennzeichnet, dass
die Kathode (28) derart ausgebildet ist, dass diese an jeder Stelle einen konstanten Abstand von der Innenoberfläche (10) des Edelstahltankes (12) aufweist.

12. Vorrichtung (100) nach einem der Ansprüche 8 bis 11,
dadurch gekennzeichnet, dass
das Drehlager wenigstens zwei Lagerböcke (14) mit jeweils wenigstens zwei Rädern (16) zum Auflegen des Edelstahltankes (12) aufweist, wobei wenigstens ein Rad (16) mit einer Antriebsvorrichtung verbunden ist.

13. Vorrichtung (100) nach Anspruch 12,
dadurch gekennzeichnet, dass
die Räder (16) gummibereift sind.

14. Vorrichtung (100) nach Anspruch 12 oder 13,
dadurch gekennzeichnet, dass
wenigstens ein Rad (16) mit der Stromquelle verbunden ist und auf einer Oberfläche, auf der der Edelstahltankes (12) aufliegt, eine elektrisch leitende Schicht aufweist, oder der Edelstahltank wird an mehreren Stellen über flexible Stromkabel anodisch elektrisch verbunden.
